# EUROPEAN PATENT APPLICATION

(11) **EP 4 529 238 A1**
(43) Date of publication of application: **26.03.2025**
(21) Application number: 23806980.1
(22) Date of filing: 17.05.2023
(51) Int. Cl.: H04W 4/08

(54) **COMMUNICATION PROCESSING METHOD AND APPARATUS, AND COMMUNICATION DEVICE AND READABLE STORAGE MEDIUM**

(30) Priority: 20.05.2022 CN 202210554989
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: WANG, Rong, Beijing 100032 (CN); SONG, Yue, Beijing 100032 (CN); WEI, Bin, Beijing 100032 (CN); ZHANG, Jianyin, Beijing 100032 (CN)
(74) Representative: Maiwald GmbH
(86) International application number: PCT/CN2023/094751
(87) International publication number: WO 2023/222029

(57) **Abstract**

Provided in the embodiments of the present disclosure are a communication processing method and apparatus, and a communication device and a readable storage medium. The method comprises: sending a multicast data packet to a radio access network element by means of an MBS session, wherein the multicast data packet caries group information, the group information being used for indicating a terminal which receives a multicast message sent by the radio access network element by means of the MBS session.

## Description

### CROSS-REFERENCE TO RELATED APPLICATIONS

This application claims the benefit of priority to Chinese Patent Application No. 202210554989.5, filed on May 20, 2022, the entire contents of which are incorporated herein by reference for all purposes.

### TECHNICAL FIELD

Embodiments of the disclosure relate to the field of communication technology, and in particular to a method and an apparatus for communication processing, a communication device, and a readable storage medium.

### BACKGROUND

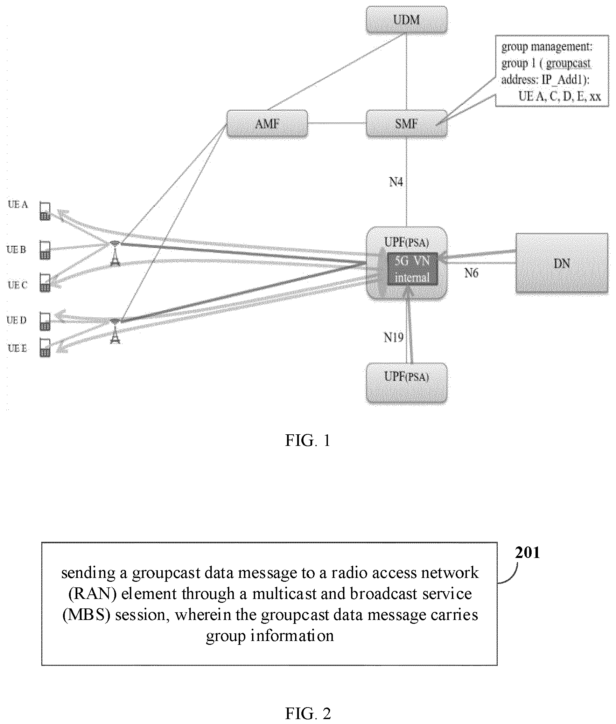

As shown in FIG. 1, a groupcast message within a fifth generation mobile communication technology (5G) local area network (LAN) may be received from an N6/N19 interface and sent to user equipment (UE) A, UE C, UE D, and UE E in group 1, which is currently being served by a session management function (SMF). The problem that needs to be solved is how a user plane function (UPF) sends the groupcast message to the UEs in the group 1 through a multicast and broadcast service (MBS) session.

### SUMMARY

Embodiments of the disclosure aim to provide a method and an apparatus for communication processing, a communication device, and a readable storage medium to solve a problem of how to send a groupcast message to a terminal that requires the groupcast message through a multicast and broadcast service (MBS) session.

According to a first aspect, a method for communication processing, applied to a user plane function (UPF) is provided. The method includes:
sending a groupcast data message to a radio access network (RAN) element through an MBS session, in which the groupcast data message carries group information, and the group information indicates a terminal that receives the groupcast message sent through the MBS session by the RAN element.

Optionally, the group information includes at least one of: a group member identifier (ID); a group ID; or a group ID and a group member ID list;
in which the group ID is configured to determine the group member ID, and the group member ID is configured to perform a context association mapping with the MBS session, to enable the RAN element to send the groupcast message to a terminal corresponding to the group member ID through the MBS session.

Optionally, the method further includes:
obtaining the group information from a session management function (SMF).

Optionally, the method further includes: obtaining an MBS session establishment or revision request;
in which the MBS session establishment or revision request carries a packet detection rule (PDR) and/or a forwarding action rule (FAR), in which the PDR carries a data filtering condition and/or a data detection condition, the data filtering condition and/or the data detection conditions includes one or more of: a group ID, an internet protocol (IP) address corresponding to the group ID, a medium access control (MAC) address corresponding to the group ID, and the FAR carries a group message transmission indicator.

Optionally, the method further includes:
adding the group information into a user plane part of general packet radio service (GPRS) tunneling protocol (GTP-U) header of the groupcast data message.

Optionally, the group member ID is a session ID corresponding to a group member session.

According to a second aspect, a method for communication processing, applied to an RAN element is provided. The method includes:
receiving a groupcast data message sent through an MBS session, in which the groupcast data message carries group information, and the group information indicates a terminal that receives the groupcast message sent through the MBS session by the RAN element; and
sending the groupcast message to a terminal corresponding to the group information through the MBS session.

Optionally, the group information includes one of: a group member ID; a group ID; or a group ID and a group member list.

Optionally, sending the groupcast message to the terminal corresponding to the group information through the MBS session includes:
determining a group member ID corresponding to the group information;
performing a context association mapping between the MBS session and the group member ID; and
sending the groupcast message to a terminal corresponding to the group member ID through the MBS session.

Optionally, performing the context association mapping between the MBS session and the group member ID includes:
detecting a GTP-U header of the groupcast data message; and
performing the context association mapping between the MBS session and the group member ID in response to the GTP-U header including the group member ID.

Optionally, the group member ID is a session ID corresponding to a group member session.

According to a third aspect, an apparatus for communication processing, applied to a UPF is provided. The apparatus includes:
a first sending module, configured to send a groupcast data message to an RAN element through an MBS session, in which the groupcast data message carries group information, and the group information indicates a terminal that receives the groupcast message sent through the MBS session by the RAN element.

According to a fourth aspect, an apparatus for communication processing, applied to an RAN element is provided. The apparatus includes:
a first receiving module, configured to receive a groupcast data message sent through an MBS session, in which the groupcast data message carries group information, and the group information indicates a terminal that receives the groupcast message sent through the MBS session by the RAN element; and
a second sending module, configured to send the groupcast message to a terminal corresponding to the group information through the MBS session.

According to a fifth aspect, a communication device is provided. The communication device includes a processor, and a memory storing a program or an instruction executable by the processor, in which when the program or the instruction is executed by the processor, steps of the method according to the first aspect or the second aspect are implemented.

According to a sixth aspect, a readable storage medium is provided. The readable storage medium has a program or an instruction thereon that, when executed by a processor, implements steps of the method according to the first aspect or the second aspect.

In embodiments of the present disclosure, the UPF sends the groupcast data message to the RAN element through the MBS session, in which the groupcast data message carries the group information, and the group information indicates the terminal that receives the groupcast message sent through the MBS session by the RAN element, to enable the RAN element to send the groupcast message to the terminal corresponding to the group information through the MBS session. Thus, the 5G LAN groupcast communication can be realized through the MBS session.

### BRIEF DESCRIPTION OF THE DRAWINGS

By reading the detailed description of the preferred embodiments below, various other advantages and benefits will become apparent to those skilled in the art. The drawings are provided solely for the purpose of illustrating the preferred embodiments and are not to be construed as limitations on the disclosure. The same reference numerals are used throughout the drawings to represent the same components.
FIG. 1 is a schematic diagram illustrating a groupcast message received by N6/N19.
FIG. 2 is a flow chart illustrating a method for communication processing according to an embodiment of the disclosure.
FIG. 3 is a flow chart illustrating a method for communication processing according to another embodiment of the disclosure.
FIG. 4 is a first flow chart illustrating a process of implementing 5G LAN multicast communication through a multicast and broadcast service (MBS) session according to an embodiment of the disclosure.
FIG. 5 is a second flow chart illustrating a process of implementing 5G LAN multicast communication through an MBS session according to an embodiment of the disclosure.
FIG. 6 is a block diagram illustrating an apparatus for communication processing according to an embodiment of the disclosure.
FIG. 7 is a block diagram illustrating an apparatus for communication processing according to another embodiment of the disclosure.
FIG. 8 is a block diagram illustrating a communication device according to an embodiment of the disclosure.

### DETAILED DESCRIPTION

The technical solutions in embodiments of the disclosure will be clearly and completely described below in conjunction with the drawings in the embodiments of the disclosure. Obviously, the described embodiments are only a part of the embodiments of the disclosure, rather than all of the embodiments. Based on the embodiments in the disclosure, all other embodiments obtained by those skilled in the art without any creative works may fall within the scope of protection of the disclosure.

The term "including" and its variations used in the specification and claims of the disclosure are intended to cover non-exclusive inclusions. For example, a process, method, system, product, or device that includes a series of steps or units is not limited to those explicitly listed but may also encompass other steps or units that are inherent to these processes, methods, products, or devices and not explicitly mentioned. Additionally, the use of "and/or" in the specification and claims indicates at least one of the connected objects; for example, "A and/or B" means it includes the cases of A alone, B alone, or both A and B.

In the embodiments of this disclosure, terms such as "exemplary" or "for example" are configured to indicate instances, examples, or explanations. Any embodiment or design described as "exemplary" or "for example" in this disclosure should not be interpreted as being preferred or more advantageous than other embodiments or designs. In particular, the use of terms like "exemplary" or "for example" aims to present relevant concepts in a detailed manner.

Referring to FIG. 2, a method for communication processing, applied to a user plane function (UPF), is provided in an embodiment of the disclosure. The method includes the following step 201.

At step 201, a groupcast data message is sent to a radio access network (RAN) element through a multicast and broadcast service (MBS) session, in which the groupcast data message carries group information, and the group information indicates a terminal that receives the groupcast message sent through the MBS session by the RAN element.

It may be understood that, each terminal has a corresponding group member identifier (ID). For example, group 1 includes a terminal A, a terminal B, and a terminal C, and group 2 includes a terminal D, a terminal E, and a terminal F. The A, B, and C are group member IDs in group 1, and the D, E, and F are group member IDs in group 2.

Optionally, the group information includes at least one of: a group member ID; a group ID; or a group ID and a group member list.

The group ID is configured to determine the group member ID, and the group member ID is configured to perform a context association mapping with the MBS session, to enable the RAN element to send the groupcast message to a terminal corresponding to the group member ID through the MBS session.

It may be understood that if the group information includes a group member ID, the group member ID may be obtained directly based on the group information.

If the group information includes a group ID, the individual group member IDs in a group corresponding to the group ID may be obtained based on the group ID and information (such as a group member list) obtained through other means.

If the group information includes a group ID and a group member list, the individual group member IDs in the group corresponding to the group ID may be determined directly based on the group ID and the group member list.

Optionally, the group ID is a groupcast address, and the group member ID is a session ID (e.g., a protocol data unit (PDU) session ID) corresponding to a group member session.

In an embodiment of the disclosure, the method further includes:
obtaining the group information from a session management function (SMF).

In an embodiment of the disclosure, the method further includes:
obtaining an MBS session establishment or revision request.

The MBS session establishment or revision request carries a packet detection rule (PDR) and/or a forwarding action rule (FAR). The PDR carries a data filtering condition and/or a data detection condition. The data filtering condition and/or the data detection conditions includes one or more of: a group ID, an internet protocol (IP) address corresponding to the group ID, a medium access control (MAC) address corresponding to the group ID. The FAR carries a group message transmission indicator.

The PDR can also be described as a message detection rule, and the FAR can also be described as a forwarding operation rule.

In an embodiment of the disclosure, the method further includes:
adding the group information into a user plane part of general packet radio service (GPRS) tunneling protocol (GTP-U) header of the groupcast data message.

In particular, adding the group information into the GTP-U header of the groupcast data message includes:
obtaining group member IDs of all group members corresponding to the group ID; and
adding the group ID and/or the group member IDs of all group members to the GTP-U header of the groupcast data message.

In embodiments of the present disclosure, the UPF sends the groupcast data message to the RAN element through the MBS session, in which the groupcast data message carries the group information, and the group information indicates the terminal that receives the groupcast message sent through the MBS session by the RAN element, to enable the RAN element to send the groupcast message to the terminal corresponding to the group information through the MBS session. Thus, the 5G LAN multicast communication can be realized through the MBS session.

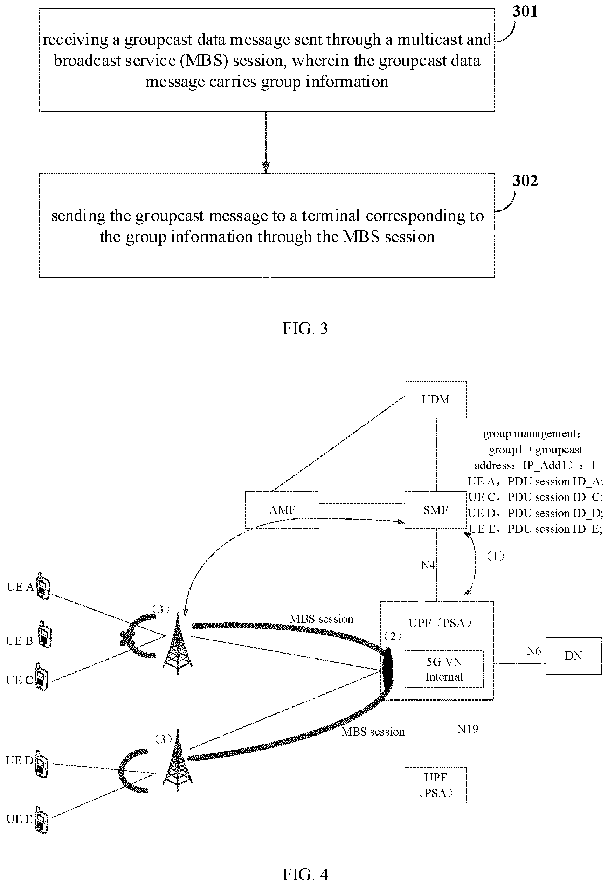

Referring to FIG. 3, a method for communication processing, applied to an RAN element, such as a next generation radio access network (NG-RAN) element, is provided in an embodiment of the disclosure. The method includes the following step 301 and step 302.

At step 301, a groupcast data message sent through an MBS session is received, in which the groupcast data message carries group information, and the group information indicates a terminal that receives the groupcast message sent through the MBS session by the RAN element.

For example, the RAN element receives the groupcast data message sent by a UPF through the MBS session.

Optionally, the group information includes one of: a group member ID; a group ID; or a group ID and a group member list.

At step 302, the groupcast message is sent to a terminal corresponding to the group information through the MBS session.

In an embodiment of the disclosure, sending the groupcast message to the terminal corresponding to the group information through the MBS session includes:
determining a group member ID corresponding to the group information;
performing a context association mapping between the MBS session and the group member ID; and
sending the groupcast message to a terminal corresponding to the group member ID through the MBS session.

It may be understood that if the group information includes a group member ID, the RAN element may directly obtain the group member ID based on the group information.

If the group information includes a group ID, the RAN element may obtain the individual group member IDs in the group corresponding to the group ID based on the group ID and information (such as a group member list stored locally) obtained through other means.

If the group information includes a group ID and a group member list, the RAN element may directly determine the individual group member IDs in the group corresponding to the group ID based on the group ID and the group member list.

In an embodiment of the disclosure, performing the context association mapping between the MBS session and the group member ID includes:
detecting a GTP-U header of the groupcast data message; and
performing the context association mapping between the MBS session and the group member ID in response to the GTP-U header including the group member ID.

In an embodiment of the disclosure, the group member ID is a session ID corresponding to a group member session.

In embodiments of the disclosure, the RAN element can send the groupcast message to the terminal corresponding to the group information through the MBS session. Thus, the 5G LAN multicast communication can be realized through the MBS session.

Referring to FIG. 4, the specific process is as follows.
(1) The SMF synchronizes the group information to the UPF.
   Optionally, the group information includes at least one of: a group member ID; a group ID; or a group ID and a group member list. For example, the group information includes: {groupcast address, group member ID}, and the group member ID at least includes a PDU Session ID corresponding to the group member session.
(2) The MBS session (or MBS PDU Session):
   a downlink PDR/FAR:
   a PDR :{ source interface: 5G VN internal, destination address: groupcast address IP_Add1};
   a FAR :{ destination interface: access, N3/N9 tunnel information related to the LAN-MBS session, multicast indicator}.
   When an action in the FAR is Multicast, it is identified that the UPF may extract PDU session IDs of all group members corresponding to the groupcast address based on the group information. The PDU session IDs of all group members are added into the GTP-U header on the N3 interface.
(3) A NG-RAN processing method:
   after the NG-RAN receiving the groupcast data message sent by the MBS session and detecting the GTP-U header, when the NG-RAN finds that the GTP-U header includes PDU session IDs of group members of a certain group, for that data message, the NG-RAN only performs a context association mapping between the MBS session and the PDU session IDs during the message broadcasting process, and sends the mapping to the terminal corresponding to those PDU session IDs.

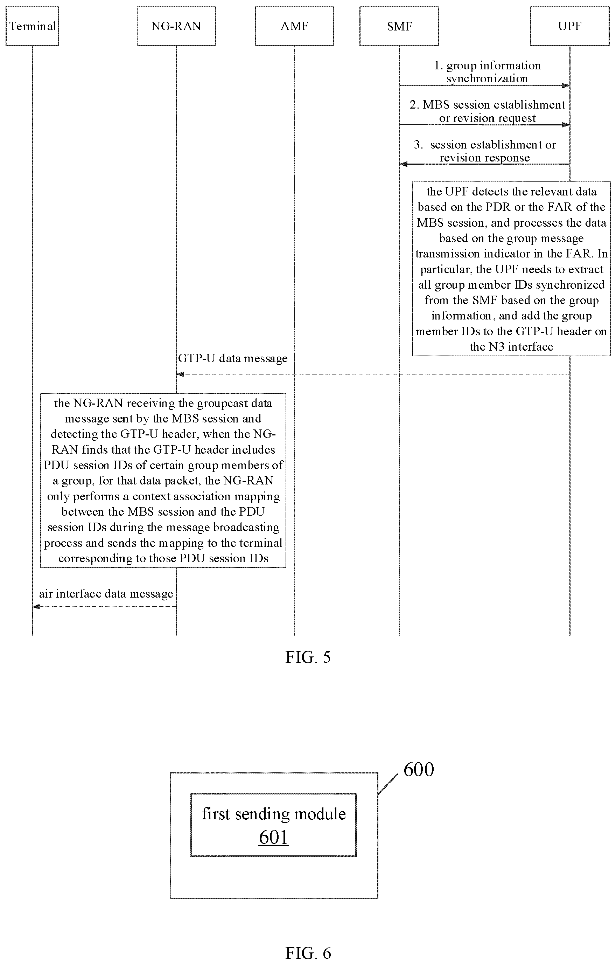

Referring to FIG. 5, a process includes the following steps.

At step 1: group information is synchronized.

Optionally, the group information includes at least one of: a group member ID; a group ID; or a group ID and a group member list. For example, the group information includes: the group ID and the group member list.

At step 2: an SMF sends an MBS session establishment or revision request to a UPF.

The MBS session establishment or revision request carries a PDR and/or a FAR.

Optionally, the PDR carries a group ID, or an IP address corresponding to the group ID, or an MAC address corresponding to the group ID.

Optionally, the FAR carries a group message transmission indicator.

At step 3: the UPF sends the session establishment or revision response to the SMF.

At step 4: the UPF detects relevant data based on the PDR or the FAR of the MBS session, and processes the data based on the group message transmission indicator in the FAR. In particular, the UPF may extract all group member IDs synchronized from the SMF based on the group information, and add the group member IDs to the GTP-U header on the N3 interface.

During the MBS session establishment and revision, the SMF sets data filtering condition and/or data detection condition in the downlink PDR of the MBS session. The data filtering condition and/or data detection condition includes one of: a group ID, an IP address corresponding to the group ID, or an MAC address corresponding to the group ID. In the FAR corresponding to the downlink PDR, a group message forwarding identifier is added to indicate that the UPF needs to extract the PDU session IDs of all group members corresponding to the group information. The PDU session IDs of all group members are added to the GTP-U header on the N3 interface.

For example, as shown in FIG. 1, the groupcast address of the groupcast message is IP_Add1, and the terminal members in the group are UE A, UE C, UE D, and UE E. The groupcast message within the MBS session is sent to UE A, UE C, UE D, and UE E, without needing to be sent to UE B.

PDR :{ source interface: 5G VN internal, destination address: groupcast address IP_Add1}.

FAR :{ destination interface: access, N3/N9 tunnel information related to the LAN-MBS session, multicast indicator}.

At step 5: the UPF sends a GTP-U data message to the NG-RAN, in which the GTP-U header includes the group member ID.

At step 6: the NG-RAN receives the groupcast data message sent by the MBS session, and detects the GTP-U header. When it is found that the GTP-U header includes the group member IDs of a certain group, for that data message, the NG-RAN only performs a context association mapping between the MBS session and the group member IDs during the sending process and sends the mapping to the terminal corresponding to the group member IDs.

At step 7: the NG-RAN sends an air interface data message to the terminal.

Referring to FIG. 6, an apparatus for communication processing, applied to a UPF, is provided in an embodiment of the disclosure. The apparatus 600 includes a first sending module 601.

The first sending module 601 is configured to send a groupcast data message to an RAN element through an MBS session, in which the groupcast data message carries group information, and the group information indicates a terminal that receives the groupcast message sent through the MBS session by the RAN element.

Optionally, the group ID is configured to determine the group member ID, and the group member ID is configured to perform a context association mapping with the MBS session, to enable the RAN element to send the groupcast message to a terminal corresponding to the group member ID through the MBS session.

In an embodiment of the disclosure, the device 600 further includes a first obtaining module.

The first obtaining module is configured to obtain the group information from an SMF.

In an embodiment of the disclosure, the device 600 further includes a second obtaining module.

The second obtaining module is configured to obtain an MBS session establishment or revision request.

The MBS session establishment or revision request carries a PDR and/or a FAR, in which the PDR carries a data filtering condition and/or a data detection condition. The data filtering condition and/or the data detection condition includes one or more of: a group ID, an IP address corresponding to the group ID, or an MAC address corresponding to the group ID, and the FAR carries a group message transmission indicator.

In an embodiment of the disclosure, the device 600 further includes a processing module.

The processing module is configured to add the group information into a GTP-U header of the groupcast data message.

In an embodiment of the disclosure, the group member ID is a session ID corresponding to a group member session.

The apparatus provided in the embodiments of the present disclosure is capable of implementing the various processes of the methods shown in FIG. 2 and achieving the same technical effects. To avoid repetition, further details are not reiterated here.

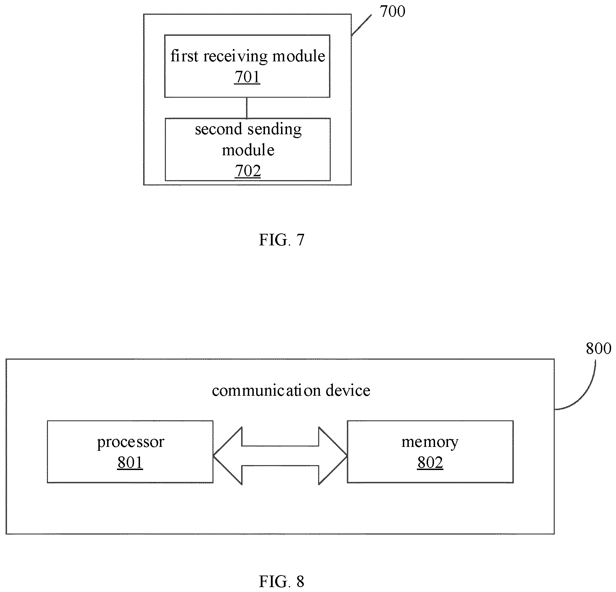

Referring to FIG. 7, an apparatus for communication processing, applied to an RAN, is provided in an embodiment of the disclosure. The apparatus 700 includes a first receiving module 701 and a second sending module 702.

The first receiving module 701 is configured to receive a groupcast data message sent through an MBS session, in which the groupcast data message carries group information, and the group information indicates a terminal that receives the groupcast message sent through the MBS session by the RAN element.

The second sending module 702 is configured to send the groupcast message to a terminal corresponding to the group information through the MBS session.

In an embodiment of the disclosure, the second sending module 702 is further configured to determining a group member ID corresponding to the group information; perform a context association mapping between the MBS session and the group member ID; and send the groupcast message to a terminal corresponding to the group member ID through the MBS session.

In an embodiment of the disclosure, the second sending module 702 is further configured to detect a GTP-U header of the groupcast data message; and perform the context association mapping between the MBS session and the group member ID in response to the GTP-U header including the group member ID.

In an embodiment of the disclosure, the group member ID is a session ID corresponding to a group member session.

The apparatus provided in the embodiments of the present disclosure is capable of implementing the various processes of the methods shown in FIG. 3 and achieving the same technical effects. To avoid repetition, further details are not reiterated here.

Referring to FIG. 8, a communication device 800 is provided in an embodiment of the disclosure. The device 800 includes a processor 801, and a memory 802 storing a program or an instruction executable by the processor 801, in which when the program or the instruction is executed by the processor 801, the various processes of the methods shown in FIG. 2 or FIG.3 is implemented, achieving the same technical effects. To avoid repetition, further details are not reiterated here.

A readable storage medium is provided in an embodiment of the disclosure. The readable storage medium has a program or an instruction stored thereon that, when executed by a processor, implements the various processes of the methods shown in FIG. 2 or FIG.3, achieving the same technical effects. To avoid repetition, further details are not reiterated here.

The processor is a processor in the terminal described in the above embodiment. The readable storage medium, includes a computer-readable storage medium such as a computer read-only memory (ROM), a random access memory (RAM), a disk or a CD-ROM, and the like.

The steps of the methods or algorithms described with reference to the content disclosed in the disclosure may be implemented in hardware or by executing software instructions on a processor. The software instructions may include corresponding software modules, which may be stored in an RAM, a flash memory, an ROM, an erasable programmable read-only memory (EPROM), an electrically erasable programmable read-only memory (EEPROM), registers, a hard disk, a removable hard disk, a read-only CD-ROM, or any other form of storage medium known in the art. An exemplary storage medium is coupled to the processor, enabling the processor to read information from and write information to the storage medium. The storage medium may also be a component of the processor. The processor and the storage medium may be carried in an application specific integrated circuit (ASIC). Alternatively, the ASIC may be carried in a core network interface device. The processor and the storage medium may also be present in the core network interface device as discrete components.

Those skilled in the art should realize that, in one or more of the above examples, the functions described in the disclosure can be implemented using hardware, software, firmware, or any combination thereof. When implemented in software, the functions may be stored in a computer-readable medium or transmitted as one or more instructions or codes on a computer-readable medium. The computer-readable medium includes a computer storage medium and a communication medium, in which the communication medium includes any medium that facilitates transmitting a computer program from one location to another. The storage medium may be any usable medium that can be accessed by general or specific computers.

The specific embodiments described above further detail the objectives, technical solutions, and beneficial effects of the disclosure. It should be understood that the above descriptions are merely specific embodiments of the disclosure and are not intended to limit its scope of protection. Any modifications, equivalent replacements, or improvements made based on the technical solutions of the disclosure should be included within its scope of protection.

Those skilled in the art should understand that the embodiments of the present disclosure may be provided as a method, a system, or a computer program product. Thus, embodiments of the present disclosure may take the form of an entirely hardware embodiment, an entirely software embodiment, or embodiments incorporating both software and hardware aspects of embodiments. Moreover, embodiments of the present disclosure may take the form of a computer program product implemented on one or more computer-readable storage media (including but not limited to a disk memory, CD-ROMs, and an optical memory, etc.), including a computer-usable program code.

Embodiments of the present disclosure is described according to a flowchart and/or block diagram of a method, a device (system), and a computer program product according to the embodiments of the present disclosure. It should be understood that each process and/or block in the flowchart and/or a block diagram, and a combination of a process and/or block in in the flowchart and/or a block diagram may be implemented by computer program instructions. These computer program instructions may be provided to a processor of a general purpose computer, a dedicate purpose computer, an embedded processor, or other programmable data processing device to generate a machine, such that when instructions are executed by the processor of the computer or other programmable data processing device, an apparatus for implementing a function specified in one or more processes in the flowchart and/or one or more blocks in the block diagram is generated.

These computer program instructions may also be stored in a computer-readable memory that can direct a computer or other programmable data processing device to work in a particular manner, such that the instructions stored in the computer-readable memory produce a product that includes an instruction device that is implemented in a function specified in one or more processes in the flowchart and/or one or more blocks in the block diagram.

These computer program instructions may also be loaded to a computer or other programmable data processing device, such that a series of operational steps are performed on a computer or other programmable device to produce a computer-implemented process, such that instructions executed on a computer or other programmable device provide for implementing steps of specified functions in one or more processes in the flowchart and/or one or more blocks in the block diagram.

Obviously, those skilled in the art may make various modifications and variations to embodiments of the present disclosure without departing from the spirit and scope of the present disclosure. Thus, if these modifications and variations of embodiments of the present disclosure fall within the scope of the claims and their equivalents, the present disclosure is also intended to encompass these modifications and variations.

## Claims

1. A method for communication processing, applied to a user plane function (UPF), comprising:
sending a groupcast data message to a radio access network (RAN) element through a multicast and broadcast service (MBS) session, wherein the groupcast data message carries group information, and the group information indicates a terminal that receives the groupcast message sent through the MBS session by the RAN element.

2. The method according to claim 1, wherein the group information comprises at least one of: a group member identifier (ID); a group ID; or a group ID and a group member ID list;
wherein the group ID is configured to determine the group member ID, and the group member ID is configured to perform a context association mapping with the MBS session, to enable the RAN element to send the groupcast message to a terminal corresponding to the group member ID through the MBS session.

3. The method according to claim 1, further comprising:
obtaining the group information from a session management function (SMF).

4. The method according to claim 1, further comprising:
obtaining an MBS session establishment or revision request;
wherein the MBS session establishment or revision request carries a packet detection rule (PDR) and/or a forwarding action rule (FAR), wherein the PDR carries a data filtering condition and/or a data detection condition, the data filtering condition and/or the data detection condition comprises one or more of: a group identifier (ID), an internet protocol (IP) address corresponding to the group ID, or a medium access control (MAC) address corresponding to the group ID, and the FAR carries a group message transmission indicator.

5. The method according to claim 1, further comprising:
adding the group information into a user plane part of general packet radio service (GPRS) tunneling protocol (GTP-U) header of the groupcast data message.

6. The method according to claim 2, wherein the group member ID is a session ID corresponding to a group member session.

7. A method for communication processing, applied to a radio access network (RAN) element, comprising:
receiving a groupcast data message sent through a multicast and broadcast service (MBS) session, wherein the groupcast data message carries group information, and the group information indicates a terminal that receives the groupcast message sent through the MBS session by the RAN element; and
sending the groupcast message to a terminal corresponding to the group information through the MBS session.

8. The method according to claim 7, wherein the group information comprises one of: a group member identifier (ID); a group ID; or a group ID and a group member list.

9. The method according to claim 8, wherein sending the groupcast message to the terminal corresponding to the group information through the MBS session comprises:
determining a group member ID corresponding to the group information;
performing a context association mapping between the MBS session and the group member ID; and
sending the groupcast message to a terminal corresponding to the group member ID through the MBS session.

10. The method according to claim 9, wherein performing the context association mapping between the MBS session and the group member ID comprises:
detecting a user plane part of general packet radio service (GPRS) tunneling protocol (GTP-U) header of the groupcast data message; and
performing the context association mapping between the MBS session and the group member ID in response to the GTP-U header comprising the group member ID.

11. The method according to claim 8, wherein the group member ID is a session ID corresponding to a group member session.

12. An apparatus for communication processing, applied to a user plane function (UPF), comprising:
a first sending module, configured to send a groupcast data message to a radio access network (RAN) element through a multicast and broadcast service (MBS) session, wherein the groupcast data message carries group information, and the group information indicates a terminal that receives the groupcast message sent through the MBS session by the RAN element.

13. An apparatus for communication processing, applied to a radio access network (RAN) element, comprising:
a first receiving module, configured to receive a groupcast data message sent through a multicast and broadcast service (MBS) session, wherein the groupcast data message carries group information, and the group information indicates a terminal that receives the groupcast message sent through the MBS session by the RAN element; and
a second sending module, configured to send the groupcast message to a terminal corresponding to the group information through the MBS session.

14. A communication device, comprising: a processor, and a memory storing a program or an instruction executable by the processor, wherein when the program or the instruction is executed by the processor, steps of the method according to any one of claims 1 to 11 are implemented.

15. A readable storage medium having a program or an instruction stored thereon that, when executed by a processor, implements steps of the method according to any one of claims 1 to 11.
